# EUROPEAN PATENT APPLICATION

(11) **EP 1 336 590 A2**
(43) Date of publication of application: **20.08.2003**
(21) Application number: 02025715.0
(22) Date of filing: 15.11.2002
(51) Int. Cl.: C03B 19/12

(54) **Method and apparatus for removing macro bubbles in a sol-gel process for producing glass**

(30) Priority: 16.02.2002 KR 2002008326
(71) Applicant: SAMSUNG ELECTRONICS CO., LTD., Suwon-City, Kyungki-do (KR)
(72) Inventor: Lee, Sang-Jin, Suwon-city, Kyungki-do (KR); Park, Keun-Deok, Suwon-city, Kyungki-do (KR); Hyun, Ji-Myung, Suwon-city, Kyungki-do (KR)
(74) Representative: Grünecker, Kinkeldey, Stockmair & Schwanhäusser Anwaltssozietät

(57) **Abstract**

The present invention relates to a process of producing a silica glass in which the sol is transported from a mixer to a former under a certain amount of pressure. The transportation path of the sol is vacuumized in order to remove macro bubbles that can be potentially produced while the sol is transported from the mixer to the former. The interior of a piping connecting between the mixer for bearing the sol and the former for forming the gel is maintained in the vacuum state so as to effectively remove the macro bubbles, which can be potentially produced during the transportation of the sol.

## Description

The present invention relates to a method of producing a silica glass using a sol-gel process, and more particularly, to a method of removing macro bubbles formed on the sol during the sol-gel process to produce a high pure, silica glass.

Silica glass material is widely used as an optical component, such as an optical fiber and optical lens, due to its transparency, chemical inertness, excellent thermal stability and strength, and low thermal expansion coefficient. An optical fiber is comprised of an inner core and a cladding with varying refractive indexes for ensuring a total reflection of optical signals within the core member. Such an optical fiber is generally produced from an optical fiber preform, which consists of a core rod and an overcladding tube surrounding the core rod, by applying a heat treatment and then drawing the preform at a certain diameter. Common techniques used to produce an optical fiber preform is a Modified Chemical Vapor Deposition (MCVD) method, an Outside Vapor Deposition (OVD) method, and the like. The MCVD technique allows to fabricate an optical fiber preform from a high pure, silica glass overcladding tube using the sol-gel process.

The sol-gel process includes a liquid-phase operation capable of yielding a high productivity and a high economic efficiency as the composition of articles can be adjusted freely and processed at a low temperature. In operation, the sol-gel process mixes silica, additive, and deionizing agent in a mixer to form the sol. Regarding this, Korean Laid-Open Patent Application No. 1998-4604, entitled "*Producing Method of Silica Glass,"* filed by the Applicant on Feb. 16, 1998 discloses a method of injecting a sol into molds under the pressure of inert gas, then injected into a mixer without using the difference in water level or a pump. However, this method exposes the sol to the ambient atmosphere, such that bubbles and residual gas tend to remain in the sol, thereby degrading the reliability of the articles.

It is the object of the present invention to overcome the above-described problems, and to provide a method and an apparatus for removing macro bubbles that may be potentially produced during a sol-gel process.

This object is met by the features of claims 1 and 10.

According to one aspect of the invention, the method of removing macro bubbles during the sol-gel process involves removing bubbles that are produced during the transportation of a sol into a former, thereby producing a high pure, silica glass formed articles.

According to another aspect of the invention, the method of removing macro bubbles involves simultaneously vacuumizing the transportation path of a sol and the mixer containing the sol via a vacuum pump.

The inventive method not only vacuumizes the mixer containing the sol but also vacuumizes the transportation path of the sol from the mixer to the former in order to effectively remove the macro bubbles produced in the sol during transportation stage.

According to a further aspect of the invention, the vacuumizing means utilizes a vacuum pump installed in the mixer containing the sol. As such, when maintaining the interior of the mixer in the vacuum state, the vacuum pump can simultaneously maintain the transportation path of the sol, connecting between the mixer and the former, in the vacuum state.

According to a further aspect of the invention, the transportation path of the sol between the mixer and the former is formed using a pipe and a valve installed at a certain portion of the pipe, such that the valve is closed during the actuation of the vacuum pump installed in the mixer to enable the interior of the pipe to be in a vaccum state as well. The valve may be preferably provided in the rear end of the filter in order to remove the macro bubbles that are produced in the sol while passing through the filter. Further, the pipe, defining the transportation path of the sol, is provided with a filter for removing condensed particles, which are produced in the sol during the transportation process from the mixer.

In the embodiment, the transportation path of the sol from the mixer to the former can be other than the piping as long as other alternatives can realize the object. Although the invention simultaneously applies the vacuum pump to both of the mixer and the transportation path, an additional vacuumizing means can be used to vacuumize the transportation path.

According to yet another aspect of the invention, an apparatus for producing a silica glass includes a mixer for containing a sol; a former for gelling the sol received therein; a transportation path for transporting the sol from the mixer and to the former; a vaccum pump coupled to the mixer for vacumming the mixer and the interior of the transportation path. The apparatus further includes a valve disposed between the mixer and the former along the transportation path, wherein the valve is closed so as to maintain the mixer and the transportation path in a vacuum state, and wherein the valve is opened when the sol is transported from the mixer and to the former via said transportation path.

The above features and other advantages of the present invention will be more clearly understood from the following detailed description taken in conjunction with the accompanying drawings, in which:
Fig. 1 is a schematic view of a sol-gel process according to a preferred embodiment of the invention;
Fig. 2 is a picture of a silica glass produced by a conventional silica glass producing method; and,
Fig. 3 is a picture of a silica glass produced according to the preferred embodiment of the invention.

In the following description, for purposes of explanation rather than limitation, specific details are set forth such as the particular architecture, interfaces, techniques, etc., in order to provide a thorough understanding of the present invention. However, it will be apparent to those skilled in the art that the present invention may be practiced in other embodiments, which depart from these specific details. For purposes of simplicity and clarity, detailed descriptions of well-known devices, circuits, and methods are omitted so as not to obscure the description of the present invention with unnecessary detail.

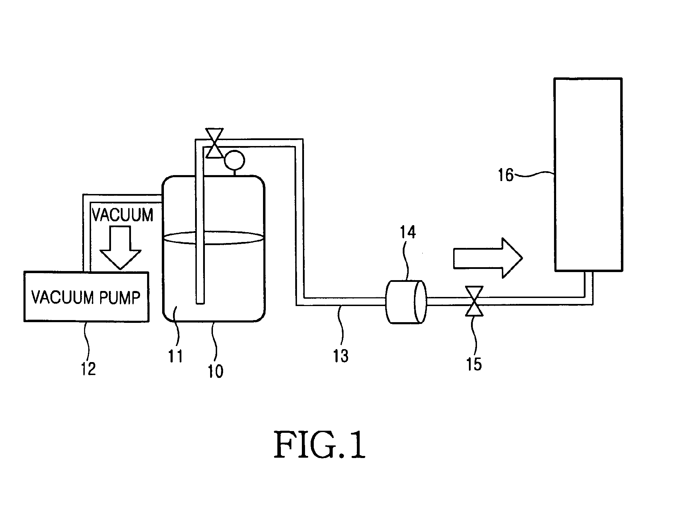

Fig. 1 is a schematic view illustrating the sol-gel process according to a preferred embodiment of the invention. In the process of supplying sol 11 to a former 16 according to the present invention, the sol 11 in the form of liquid is initially disposed in a mixer 10. The sol 11 is formed by mixing a high pure silica, an additive, and deionized water together. The additive may include a dispersing agent, a coupling agent, a plasticizer, and a gelling agent, etc. The dispersing agent utilizes tetramethyl ammonium hydroxide, tetraethyl ammonium hydroxide and so on, i.e. 4 level ammonium hydroxides. The coupling agent utilizes polyethyl oxasoline, polyvinyl accetate and so on. The plasticizer utilizes polyhydric alcohol such as ethylene glycol. Lastly, the gelling agent may include methyl formate, methyl lactate and so on, i.e. water-soluble aliphatic ester selected from a group which includes form acid, lactic acid, and glycol acid.

The sol 11 formed by mixing the above-mentioned silica and additive into the mixer 10, as shown in Fig. 1, then the sol 11 is aged for a predetermined time period. Thereafter, the sol 11 is transported into the former 16 via a connector means and then gelled therein. The connector means may include a duct or piping 13 with a specific diameter. A filter 14 is provided along the piping 13 for clearing condensed particles that are formed in the sol 11 during transportation.

The mixer 10 containing the sol 11 is equipped with a vacuum pump 12, which is adapted to clear bubbles or residual gas in the sol 11. During the operation of the pump 12, a valve 15, which is provided at the output end of the filter 14 is closed, such that the effect of vacuum acting on the mixer 10 up to the valve 15 of the piping 13 is applied thereon. The above processes are repeated for several times to achieve a vacuum state from the mixer 10 to the valve 15, then an inert gas is introduced into the mixer 10 in the vacuum state so that the pressure of inert gas can transport the sol 11 from the mixer 10 toward the former 16. The inert gas may be nitrogen or other equivalent gas. Note that the valve 15 is located before the entrance of the former 16 to maintain the entire piping 13 in the vacuum state.

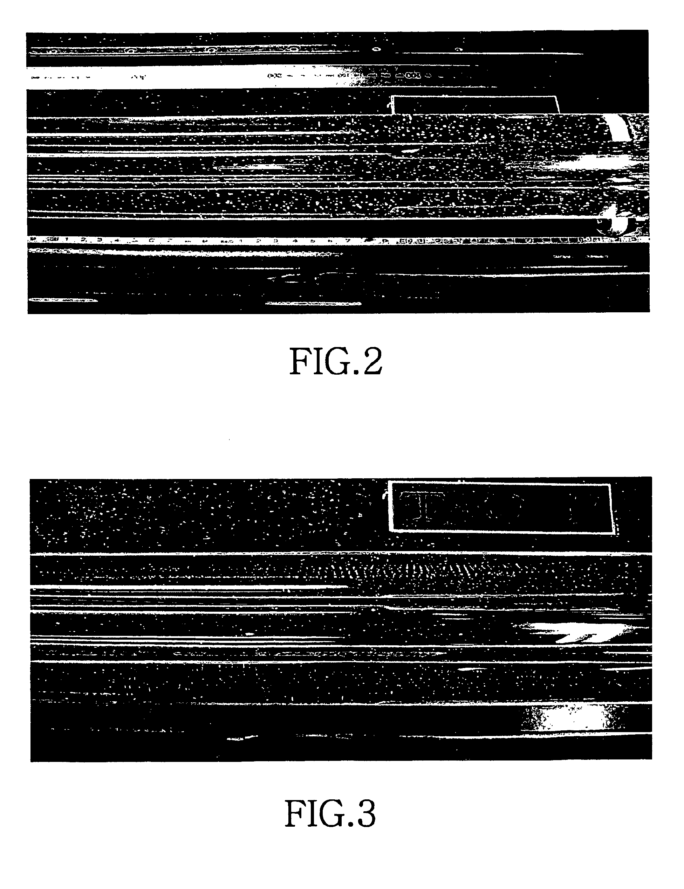

Fig. 2 is a picture of a silica glass produced by a conventional silica glass producing method, and Fig. 3 is a picture of a silica glass produced according to the preferred embodiment of the invention. Comparing Figs. 2 and 3, it can be seen from Fig. 3 that the presence of macro bubbles is effectively removed from the silica glass, which is obtained according to the present invention. The inventive method allows to maintain a vacuum state in the interior of the piping that connects between the mixer and the former to effectively remove the macro bubbles that can potentially produced while the sol passes through the filter as in the prior art.

Having thus described a preferred embodiment of a method for removing bubbles that may be formed in the sol during the manufacturing process, it should be apparent to those skilled in the art that certain advantages of the present invention have been achieved.

## Claims

1. A method of producing a silica glass, the method comprising the steps of:
(a) providing a sol (11) in a mixer (10) wherein said sol (11) is to be transported along a transportation path (13) from the mixer (10) to a former (16) for gelling the sol,
(b) removing macro bubbles by vacuumizing the transportation path (13) of the sol (11),
(c) transporting the sol (11) from the mixer (10) to the former (16) under a predetermined pressure.

2. The method of Claim 1, wherein the transportation path (13) of the sol and the mixer (10) are simultaneously maintained in a vacuum state via a vacuumizing operation.

3. The method of Claim 1, wherein the mixer (10) and the transportation path (13) of the sol are maintained in a vacuum state using a vacuum pump (12) coupled to the mixer.

4. The method of Claim 1, further comprising the step of providing a filter (14) along the transportation path of the sol (11) for removing condensed particles passing therethrough.

5. The method of Claim 4, wherein the vacuum pump (12) is actuated after a valve (15) in the rear end of the filter (14) is closed so as to maintain the mixer and the transportation path (13) of the sol in a vacuum state.

6. The method of Claim 1, wherein the transportation path of the sol (11) comprises a hollow piping (13) having a predetermined thickness connected between the mixer (10) and the former (16).

7. The method of Claim 1, further comprising the step of repeating said steps (b) and (c) for a predetermined number of times to provide a vacuum state from the mixer (10) to the former (16).

8. The method of Claim 1, wherein in step c) an inert gas introduced into the mixer (10) during the vacuum state so that the pressure of the inert gas forces the sol to travel from the mixer (10) toward the former (16).

9. The method of claim 8, whrein the inert gas is nitrogen.

10. An apparatus for performing a sol-gel process to produce a silica glass comprising:
a mixer (10) for containing a sol;
a former (16) for gelling the sol received therein;
a transportation path (13) for transporting the sol from the mixer and to the former;
a vacuum pump (12) coupled to the mixer (10) for vacuuming the mixer (10) and the interior of the transportation path (13).

11. The apparatus of Claim 10, further comprising a valve (15)disposed between the mixer (10) and the former (16) along the transportation path 13.

12. The apparatus of Claim 11, wherein the valve (15) is closeable so as to maintain the mixer and the connecting means in a vacuum state.

13. The apparatus of Claim 10, wherein the valve (15) is openable when the sol is transported from the mixer (10) and to the former (16) via said transportation path (13).

14. The apparatus of Claim 10, wherein the sol is transported from the mixer (10) to the former (16) via the transportation path (13) by introducing an inert gas in the mixer (10) so that the pressure of the inert gas forces the sol to travel from the mixer (10) toward the former (16).

15. The apparatus of Claim 10, further comprising a filter (14) along said transportation path (13) for removing condensed particles passing therethrough.
